# EUROPEAN PATENT APPLICATION

(11) **EP 3 842 280 A1**
(43) Date of publication of application: **30.06.2021**
(21) Application number: 19315172.7
(22) Date of filing: 26.12.2019
(51) Int. Cl.: B60L 53/302, B60L 53/16

(54) **INLET CONNECTOR WITH COOLER**

(71) Applicant: Aptiv Technologies Limited, 14004 St. Michael (BB)
(72) Inventor: Mleczko, Marek, 30-868 Kraków (PL); Wrzosek, Slawomir, 32-020 Wieliczka (PL); Albertin, Christian, 28000 Chartres (FR)
(74) Representative: INNOV-GROUP

(57) **Abstract**

Inlet connector (250) for charging batteries of electrical or plug-in hybrid vehicles. The inlet connector (250) comprises two terminals (6) for DC fast charging and a housing (4) with respective cavities (5) for accommodating each one of the two terminals (6) therein.

The inlet connector (250) further comprises a cooler (80) thermally connected to the terminals (6) through at least one thermal bridge (10) comprising at least one dielectric element (120). For instance, the dielectric element (120) is made of a ceramic material.

## Description

### TECHNICAL FIELD OF INVENTION

This disclosure generally relates to the field of automotive connections and more particularly the field of power connectivity for motor vehicles. For example, this disclosure relates to an inlet power connector, such as those used to charge batteries of electric vehicles or a plug-in hybrid vehicles.

### BACKGROUND OF INVENTION

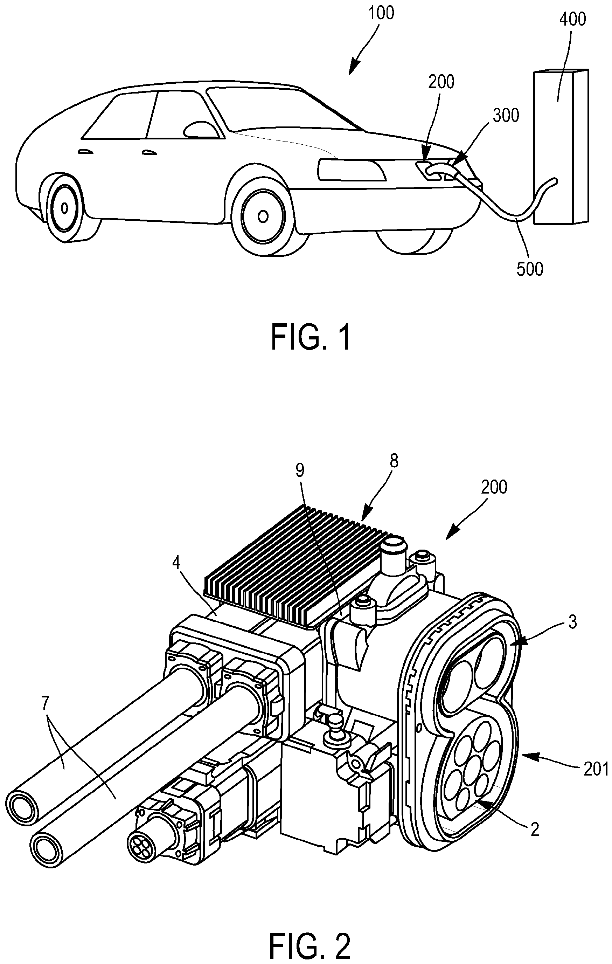

Thus, for example, as shown schematically in FIG. 1, electric vehicles or plug-in hybrid vehicles 100 may comprise a connector base or inlet or socket 200 on which a charge plug 300 powered by an electric charging station 400 can be connected via a cable 500. This charge plug 300 then makes it possible to charge battery cells on board of the vehicle 100.

The connector inlet 200 comprises a housing made of dielectric material and terminals each respectively accommodated in a cavity formed in the housing.

Users want to recover the maximum of battery life in the shortest possible time. There is consequently a need for increasing the current intensity above, for example, 500 Amps. However, the higher the intensity, the higher the heating of conductors, and more particularly the heating of the terminals of the power inlet connector 200 onto which is connected the charge plug 300. Cooling solutions must be developed in order to allow progresses to continue in fast charging.

This disclosure aims at contributing to such progresses with an inlet connector according to claim 1.

The cooler helps draining the heat away from the terminals while the dielectric element electrically insulates the terminals from the cooler and from one another. Further, the dielectric element prevents a user touching the cooler from having an electrical shock.

Other features of this inlet connector are mentioned in the dependent claims, considered separately from one another, or each one considered in combination to one or several other claims.

### BRIEF DESCRIPTION OF THE SEVERAL VIEWS OF THE DRAWING

Inlet connectors are disclosed below, by way of examples with reference to the accompanying drawings, in which:
FIG. 1 is an illustration of an electric vehicle or plug-in hybrid vehicle equipped with an inlet connector.
FIG. 2 is a schematic perspective view of an inlet connector in accordance with a first embodiment;
FIG. 3 is a schematic perspective exploded view of elements of the inlet connector of FIG. 2;
FIG. 4 is a schematic perspective view of a portion of the thermal bridge of the inlet connector of FIGS. 2 and 3;
FIG. 5 is a schematic section-view of the thermal bridge of the inlet connector of FIGS. 2 and 3;
FIG. 6 is a schematic front view of the thermal bridge of the inlet connector of FIGS. 2 and 3;
FIG. 7 is a schematic perspective view of an inlet connector in accordance with a second embodiment;
FIG. 8 is a schematic perspective exploded view of elements of a variation of the inlet connector of FIG. 7;
FIG. 9 is a schematic perspective exploded view of the thermal bridge of the inlet connector of FIG. 8; and
FIG. 10 shows a section of the cooler of the inlet connector of FIG. 8.

### DETAILED DESCRIPTION

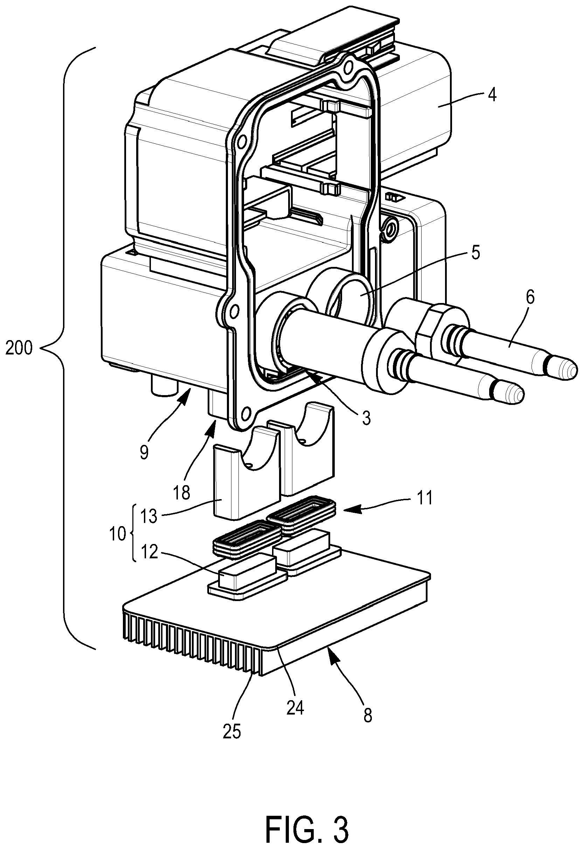

The inlet connector 200 shown on FIG. 2 is designed to be mounted in a vehicle 100. The embodiment of inlet connector 200 shown on FIG. 2 comprises a front face 201 from which two connecting interfaces 2, 3 are accessible. Such a connector is also known as Combo socket. It allows AC charging through a first interface 2 and fast DC charging through a second interface 3. The inlet connector 200 shown on FIG. 2 is protected by a door which is not shown. The inlet connector 200 comprises a housing 4 which may be made of several components. The housing 4 comprises cavities 5 for accommodating male terminals 6 (see Fig. 3). The terminals 6 are connected to cables 7. Advantageously, the housing 4 forms a sealed box. In other words, sealing means are provided between the housing 4 and the cables 7 and between the terminals 6 and the housing 4 in order to prevent humidity, dust, etc. to ingress in this box. Further, the inlet connector 200 comprises a cooler 8. Advantageously, the cooler 8 is located outside the closed box formed by the housing 4. For instance, the cooler 8 is mounted on an external face 9 of the housing 4. More particularly, the cooler 8 is mounted on the housing external face 9 which is the closest to the cavities 5 wherein the terminals 6 of the second interface 3 are located. For the terminals of the first interface 2, it is not as critical to be cooled as for the terminals of the second interface 3, because they are subjected to currents of less intensity.

The cooler 8 is thermally connected to fast charging terminals 6 via a thermal bridge 10. As for the cables 7 and the terminals 6, sealing means 11 are provided between the housing 4 and elements of the thermal bridge 10 in order to prevent humidity, dust, etc. to ingress in the housing box.

As shown on FIG. 3, the thermal bridge 10 comprises, for each terminal 6, a dielectric element 12 and an electrically conductive element 13. The dielectric element 12 shall have a good thermal conductivity. For instance, its thermal conductivity is greater than 40 W. K⁻¹. m⁻¹. The dielectric element 12 is, for instance, made of a ceramic material. More particularly, a composite sintered body of AIN and BN may be chosen for the ceramic material. An example of such a composite is sold under Shapal™ name, having a thermal conductivity of 92 W. K⁻¹. m⁻¹. The dielectric element 12 is chosen for having a good dielectric strength so as to prevent an electrical breakdown. Advantageously, a dielectric element 12 is made of a solid body without pores or holes communicating between its external surfaces, so as to make a barrier against humidity.

The dielectric element 12 is designed to be in thermal contact with the cooler 8 on one side and with an electrically conductive element 13 on another side. The electrically conductive elements 13 are made of metal. For instance, the electrically conductive elements 13 are made of copper or a copper alloy. The thermal conductivity of the electrically conductive elements is then 391 W. K⁻¹. m⁻¹. Each electrically conductive element 13 has a volume for example greater than 2500 cubic millimetres. Each electrically conductive element 13 is designed to be in thermal contact directly with a terminal 6. The geometry and the arrangement of the electrically conductive elements 13 are defined so as to have a pitch distance between them equal to 27 millimetres for example (this pitch depends on the standard specifications).

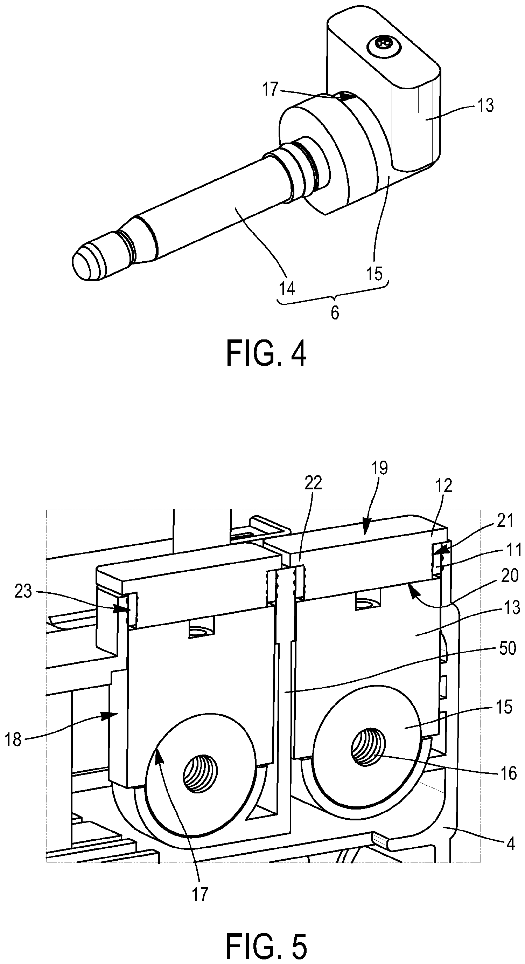

As shown on Fig. 4, the terminal 6 comprises a connecting pin 14 and a back barrel 15. The back barrel 15 of each terminal 6 is inserted and maintained in a respective accommodating cavity 5 formed in the housing 4. The back barrel 15 has, for example, a general cylindrical shape. The back barrel 15 has a threaded hole 16 (see Fig. 5) for receiving a screw attaching a support body (for instance in the form of a busbar connected on one side to a cable and on another side to the pin 6). The back barrel 15 extends along the longitudinal axis of the connecting pin 6.

The back barrel 15 of each terminal is thermally connected to an electrically conductive element 13. This electrically conductive element 13 has a general parallelepipedal shape longitudinally extending along an axis which is perpendicular to the longitudinal axis of the connecting pin 6. A notch 17 having a concave shape is made on one side of the electrically conductive element 13. This concave shape is complementary to a surface portion of the back barrel 15.

When assembling the inlet connector 200, each terminal 6 is inserted in a housing cavity 5 parallelly to its longitudinal axis. The electrically conductive element 13 is inserted, perpendicularly to the longitudinal axis of the terminal 6, in an accommodating cavity 18 made in the housing 4. A wall 50 separates two adjacent cavities so as to prevent an electrical breakdown between adjacent electrically conductive elements 13 (See Fig. 5). Then, the back barrel 15 and the electrically conductive element 13 are attached together. For instance, they are screwed together.

As shown on Fig. 5, a dielectric element 12 is placed in thermal contact over each electrically conductive element 13. A dielectric element 12 has a general parallelepipedal shape. It has a top 19 and a bottom 20 faces perpendicular to the general direction of the thermal bridge 10, and lateral faces 21 perpendicular to the top 19 and bottom 20 faces. A rim 22 extends from the top face 19, all around the lateral faces 21. Each dielectric element 12 is accommodated in a cell 23 made in the housing 4. The sealing means 11 is placed all around the lateral faces 21, in a region of the lateral faces 21 located between the bottom face 20 and the rim 22. The sealing means 11 is placed between the cell walls and the dielectric element 12 accommodated in this cell 23, so to provide a sealed passage for each thermal bridge 10 through the housing 4. The sealing 11 also prevents creepage phenomenon between the electrically conductive elements 13 and the cooler 8.

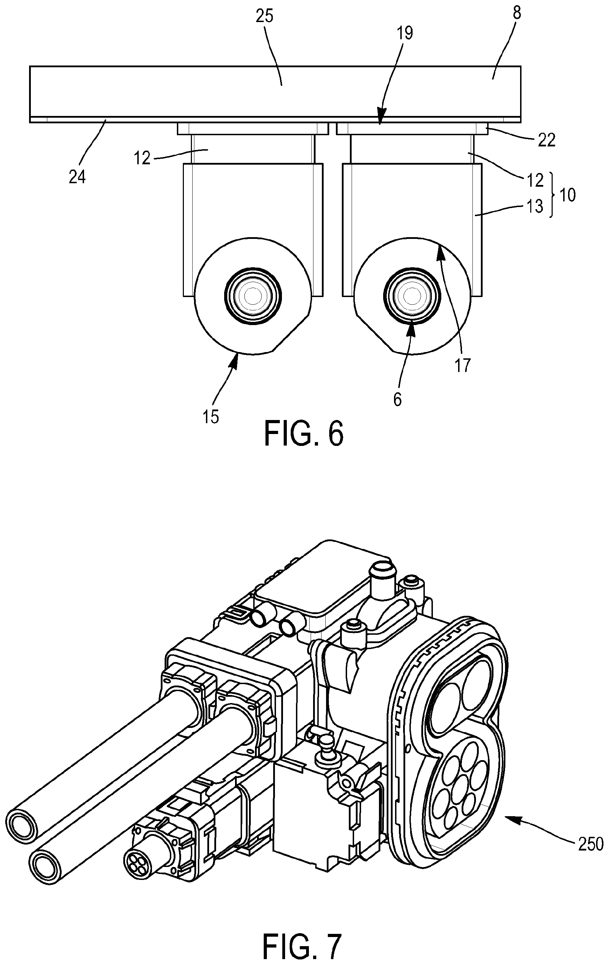

As shown on Fig. 6, the cooler 8 is placed over the top face 19 of the dielectric elements 12. The cooler 8 is a passive heat sink. It is for example made of aluminium or aluminium alloy. Is comprises a bottom base 24 in thermal contact with the dielectric elements 12 and a plurality of ribs 25 or fins extending perpendicularly from the bottom base 24 (see also Fig. 3). The bottom base 24 is screwed on the housing 4 so as to enclose each dielectric element 12 in its respective cell 23 and press each dielectric element 12 on an electrically conductive element 13.

A thermal bridge 10 is then formed between the terminals 6 and the cooler 8. The heat generated in the connecting pins 14 of the terminals 6 is transferred to the cooler 8 successively in parallel through each back barrel 15, each electrically conductive element 13 and each dielectric element 12. The heat collected in the cooler 8 is drained off thanks to air convection between the ribs 25.

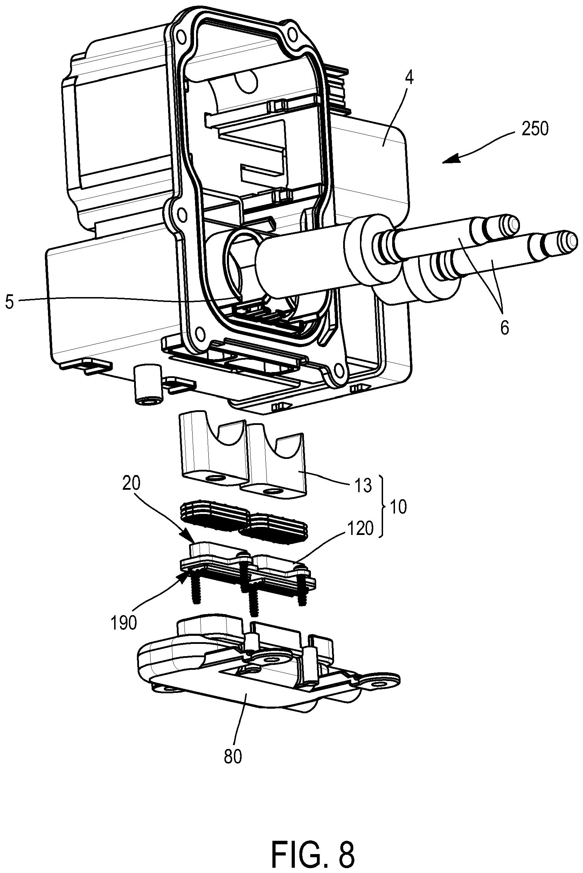

A second embodiment of an inlet connector 250 is illustrated on Figs. 7 to 10. This embodiment mainly differs from the previous one by the fact that the cooler is an active cooler 80 rather than a passive one. A first variation of this second embodiment is illustrated on Fig. 7. A second variation of this second embodiment is illustrated on Figs. 8 to 10. In the first variation of the second embodiment, the dielectric elements 12 are thermally in contact with the cooler 80, a coolant flowing through a duct made in the cooler 80, but the coolant does not flow over any surface of a dielectric element 12. In the second variation of the second embodiment, a coolant flows through a duct made in the cooler 80, and portions of the dielectric element 12 protrude in the duct so that the coolant is in direct contact with these portions.

The parts and elements, as well as their functions and properties, which are common to the first embodiment and the second embodiment (and its variations) are not repeated.

The inlet connectors 250 shown on Fig. 7 and 8 comprises a first interface 2 for AC charging and a second interface 3 for fast DC charging. The terminals 6 of the second interface 3 are thermally connected to the cooler 80 via a thermal bridge 10 passing in a sealed passage though the housing 4.

The terminals 6 and the electrically conductive elements 13 of the thermal bridge 10 are identical or similar to the ones disclosed in connection with the first embodiment. The variation of the second embodiment of the inlet connector 250, as shown on Fig. 7, mainly differs from the inlet connector 200 according to the first embodiment by the fact that the passive cooler is replaced by an active one having a duct through which a coolant passes.

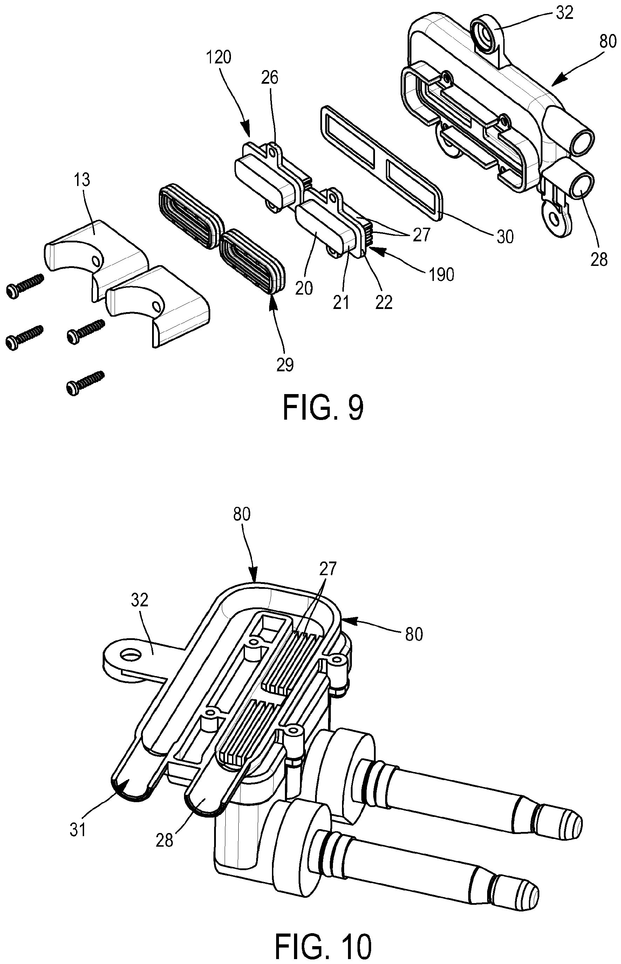

As shown on Fig. 9 and 10, as for the first embodiment, in the second embodiment, the inlet connector 250 comprises dielectric elements 120 placed in thermal contact each respectively with an electrically conductive element 13. Each dielectric element 120 has a general parallelepipedal shape. It has a top 190 and a bottom 20 faces perpendicular to the general direction of the thermal bridge 10, and lateral faces 21 perpendicular to the top 190 and bottom 20 faces. A rim 22 extends, all around the lateral faces 21. But, in the second variation of the second embodiment, the rim 22 comprises ears 26 for screwing each dielectric element 120 onto the cooler 80. Further, cooling ribs 27 extend in parallel planes, each one of these planes being perpendicular to the top face 190. Once a dielectric element 120 is screwed to the cooler 80, the cooling ribs 27 protrude in a duct 28 and extend parallel to the longitudinal direction of this duct 28.

Each dielectric element 120 is accommodated in a cell made in the housing 4. A first seal joint 29 is placed all around the lateral faces 21, in a region of the lateral faces 21 located between the bottom face 20 and the rim 22. The first seal joint 29 is placed between the cell walls and the dielectric element 120 accommodated in this cell, so to provide a sealed passage for each thermal bridge 10 through the housing 4. A second seal joint 30 is placed between the rim 22 and the cooler 80 so as to prevent a coolant circulating in the duct 28 to ingress into the housing 4.

The cooler 80 has an inlet duct 28 and an outlet duct 31. A coolant enters the cooler 80 by the inlet duct 28. Then the coolant is warmed up by the heat transferred from the terminals 6 via the thermal bridge 10 to the cooling ribs 27 immersed in the coolant and exits from the cooler 80 by the outlet duct 31.

The cooler 80 has fixation means 32 for attaching it, for instance by screws, to the housing 4. The inlet connector 250 of the second embodiment, with an active cooler 80, has improved cooling performances compared to the inlet connector 200 of the first embodiment, with a passive cooler 8.

## Claims

1. Inlet connector (200, 250) for charging batteries of electrical or plug-in hybrid vehicles (100), comprising:
- a housing (4),
- At least two terminals (6), each of which being accommodated in a respective cavity (5) formed in the housing (4),
**characterized in that** it further comprises a cooler (8, 80) thermally connected to the terminals (6) through at least one thermal bridge (10) comprising at least one dielectric element (12, 120).

2. Inlet connector (200, 250) according to claim 1, wherein said at least one dielectric element (12, 120) is made of a ceramic material.

3. Inlet connector (200, 250) according to claim 2, wherein said at least one dielectric element (12, 120) is a composite sintered body of AIN and BN.

4. Inlet connector (200, 250) according to one of the preceding claims, wherein said at least one thermal bridge (10) also comprises an electrically conductive element (13) for each of said at least two terminals, distinct from said at least two terminals (6).

5. Inlet connector (200, 250) according to claim 4, wherein the electrically conductive element (13) is attached to and in thermal contact with a respective one of said at least two terminals (6).

6. Inlet connector (200) according to one of the preceding claims, wherein the cooler (8) is a passive heat sink made of a conductive material comprising aluminium.

7. Inlet connector (250) according to one of claims 1 to 5, wherein the cooler (80) is an active cooler comprising ducts (28, 31) designed for the circulation of a coolant therein.

8. Inlet connector (250) according to claim 7, wherein said at least one dielectric element (120) comprises cooling ribs (27) protruding in at least one of the ducts (28) so as to be immersed in the coolant.

9. Inlet connector (200, 250) according to one of the preceding claims, comprising sealing means (11, 29) between the housing (4) and the thermal bridge (10).

10. Inlet connector (250) according to one of the preceding claims, comprising a seal joint (30) between said at least one dielectric element (120) and the cooler (80).
